# EUROPÄISCHE PATENTANMELDUNG

(11) **EP 4 663 949 A2**
(43) Veröffentlichungstag der Anmeldung: **17.12.2025**
(21) Anmeldenummer: 25212014.2
(22) Anmeldetag: 13.08.2021
(51) Int. Cl.: F04C 11/00

(54) **PUMPEN-MOTOR-EINHEIT MIT INTEGRATIVEM GEHÄUSEDECKEL**

(30) Priorität: 01.09.2020 DE 102020122867
(62) Teilanmeldung aus: 21191164.9
(71) Anmelder: Schwäbische Hüttenwerke Automotive GmbH, 73433 Aalen (DE)
(72) Erfinder: FINSTERLE, Thomas, 88212 Ravensburg (DE); BRAASCH, Holger, 88630 Pfullendorf (DE)
(74) Vertreter: SSM Sandmair

(57) **Zusammenfassung**

Pumpen-Motor-Einheit zur Förderung eines Fluids, beispielsweise zur Förderung von Getriebeöl und/oder Schmieröl bei Kraftfahrzeugen, die Folgendes umfasst ein Gehäuse, das einen einstückigen Gehäusedeckel (1), eine Gehäusezwischenstruktur (12) und einen Motordeckel (2) umfasst, wobei der Gehäusedeckel (1) und die Gehäusezwischenstruktur (12) eine Förderkammer axial an beiden Stirnseiten und radial umfangseitig begrenzen, eine Fördereinrichtung (10) mit einem in der Förderkammer drehbaren Förderglied (13, 14) zur Förderung des Fluids und einen Antriebsmotor (20), der über eine Antriebswelle (4) mit der Fördereinrichtung (10) verbunden ist, wobei der Gehäusedeckel (1) einen Aufnahmeschacht (11) bildet, der Antriebsmotor (20) und die Gehäusezwischenstruktur (12) in dem Aufnahmeschacht (11) angeordnet sind, der Gehäusedeckel (1) einen Druckanschluss (5) und einen Sauganschluss (6) ausbildet, und der Druckanschluss (5) und der Sauganschluss (6) in der der Förderkammer axial abgewandten Stirnseite des Gehäusedeckels (1) ausgebildet sind, und wobei der Druckanschluss (5) und der Sauganschluss (6) von einer Dichtung (15) umgeben, vorzugsweise radial umgeben, sind.

## Beschreibung

Aus dem Stand der Technik sind Pumpen-Motor-Einheiten zur Förderung eines Fluids, beispielsweise zur Förderung von Getriebeöl und/oder Schmieröl bei Kraftfahrzeugen bekannt. Derartige Pumpen-Motor-Einheiten umfassen eine Pumpe, welche von einem Antriebsmotor angetrieben wird, wobei der Antriebsmotor und die Pumpe für gewöhnlich in einem gemeinsamen Gehäuse angeordnet sind. Die Pumpen-Motor-Einheiten aus dem Stand der Technik werden in der Regel in einem Montageschacht des Verbrauchers, beispielsweise des Getriebes, montiert und werden daher auch als Schachtpumpen bezeichnet. Um die Pumpen-Motor-Einheiten aus dem Stand der Technik vor äußeren Umwelteinflüssen und Leckage zu schützen, ist die Montagestruktur in der Regel als Montageflansch ausgebildet, wobei der Montageschacht mittels einer Dichtung zwischen dem Montageflansch und der stirnseitigen Umfassung des Montageschachtes abgedichtet wird. Der Montageschacht bei derartigen Bauformen dient für gewöhnlich als Niederdruckraum, welcher mit dem zu fördernden Fluid gefüllt ist und mit dem Sauganschluss der Fluidpumpe fluidkommunizierend verbunden ist.

Das Gehäuse der Pumpen-Motor-Einheiten aus dem Stand der Technik ist in der Regel modulartig aufgebaut, wobei das Pumpengehäuse mit dem Motorgehäuse und dem Elektronikgehäuse verbunden wird, wobei die Pumpen-Motor-Einheit vor äußeren Umwelteinflüssen, wie beispielsweise Schmutz, im Wesentlichen von dem Montageschacht und der Montagestruktur geschützt wird. Insbesondere bei nasslaufenden Elektromotoren kann so häufig auf eine aufwendige und kostenintensive Abdichtung des Motorgehäuses verzichtet werden, da der die Pumpen-Motor-Einheit umgebende Montageschacht die Schutzfunktion und Abdichtung gegenüber der Umwelt übernimmt. Dies bedarf insbesondere einer genauen Fertigung des Montageschachtes und der Montagestruktur und insbesondere einer kostenintensiven Oberflächenbehandlung der miteinander in Berührung stehenden Oberflächen. Derartige Ausführungen als Schachtpumpe haben zudem den Nachteil, dass das Gehäuse des Verbrauchers, beispielsweise des Getriebes, einen Montageschacht bereitstellen müssen. Dies führt zu einem größeren Platzbedarf und in der Regel zu schwereren Verbrauchergehäusen. Zudem erhöhen sich auf Seiten des Verbraucherherstellers und des Herstellers der Pumpen-Motor-Einheit in der Regel die Entwicklungskosten.

Aus dem Stand der Technik sind außenliegende Pumpen-Motor-Einheiten bekannt, welche nicht in einem Motorschacht des Verbrauchers aufgenommen werden müssen und an dem Verbraucher von beispielsweise außen befestigt werden können. Derartige außenliegende Pumpen-Motor-Einheiten weisen häufig ein mehrteiliges Gehäuse auf, welches die Funktion des Montageschachts übernimmt und die einzelnen Bauteile innerhalb des Gehäuses vor äußeren Umwelteinflüssen schützt. Häufig kommen auch Gehäuse zum Einsatz, welche im Wesentlichen einen Montageschacht nachbilden und die Pumpen-Motor-Einheit, welche gleich einer Schachtpumpe ausgebildet ist, umgeben. Insbesondere mehrteilige Gehäuse müssen kostenintensiv abgedichtet werden, um die Pumpen-Motor-Einheit vor äußeren Umwelteinflüssen zu schützen, oder die Anzahl der Bauteile erhöht sich durch ein zusätzliches umgebendes Gehäuse, was insbesondere zu schwereren und vor allem platzintensiven Pumpen-Motor-Einheiten führt.

Es ist daher eine Aufgabe der Erfindung, eine außenliegende Pumpen-Motor-Einheit bereitzustellen, welche nicht in einem Montageschacht des Verbrauchers aufgenommen werden muss und kostengünstig und platzsparend hergestellt werden kann.

Die Aufgabe wird durch Anspruch 1 gelöst.

Eine Pumpen-Motor-Einheit, wie sie die Erfindung betrifft, kann insbesondere für den Einsatz in einem Kraftfahrzeug vorgesehen sein. Entsprechend kann die Pumpen-Motor-Einheit als Kraftfahrzeugpumpe ausgebildet sein. Vorzugsweise dient die Pumpen-Motor-Einheit zur Förderung einer Flüssigkeit, insbesondere eines Schmier-, Kühl- und/oder Betätigungsmittels. Die Pumpen-Motor-Einheit kann als Flüssigkeitspumpe ausgebildet sein. Vorzugsweise ist die Pumpen-Motor-Einheit zur Versorgung, Schmierung und/oder Kühlung eines Kraftfahrzeugantriebs, insbesondere eines Kraftfahrzeugmotors, oder eines Fahrzeuggetriebes wie beispielsweise eines Automatikgetriebes vorgesehen. Die Flüssigkeit wird bevorzugt durch ein Öl, insbesondere ein Motorschmieröl oder Getriebeöl, gebildet. Die Pumpen-Motor-Einheit ist bevorzugt als eine Motorschmiermittelpumpe für ein Kraftfahrzeug oder als eine Getriebepumpe für ein Kraftfahrzeug ausgebildet.

Die Pumpen-Motor-Einheit zur Förderung eines Fluids, wie sie die Erfindung betrifft, umfasst ein Gehäuse mit einem Gehäusedeckel, einer Gehäusezwischenstruktur und einen Motordeckel, wobei der Gehäusedeckel und die Gehäusezwischenstruktur eine Förderkammer axial an beiden Stirnseiten und radial umfangseitig begrenzen. Des Weiteren umfasst die Pumpen-Motor-Einheit eine Fördereinrichtung mit einem in der Förderkammer drehbaren Förderglied zur Förderung des Fluids und einen Antriebsmotor, der über eine Antriebswelle mit der Fördereinrichtung verbunden ist. Vorzugsweise umfasst die Pumpen-Motor-Einheit zusätzlich einen Elektronikdeckel.

Die Pumpen-Motor-Einheit kann eine Montagestruktur aufweisen, mittels welcher die Pumpen-Motor-Einheit mit einem Verbraucher, beispielsweise einem Getriebe, verbunden werden kann. Die Montagestruktur ragt bevorzugt radial außen von dem Gehäusedeckel vor. Zur Befestigung der Pumpen-Motor-Einheit kann die Montagestruktur Durchgänge aufweisen, durch welche Befestigungselemente, beispielsweise Schrauben, ragen können, um mit an dem Verbraucher vorgesehenen Bohrungen oder Ausnehmungen einen Halteeingriff zu bilden.

Das Gehäuse der Pumpen-Motor-Einheit kann mittels wenigstens eines Halteelements zusammengehalten werden. Das Halteelement kann beispielsweise durch eine Schraube oder einen Stift, insbesondere einen Pressstift, gebildet werden. Das wenigstens eine Halteelement kann von dem Gehäusedeckel und/oder dem Elektronikdeckel vorragen und/oder den Gehäusedeckel und/oder den Elektronikdeckel durchragen. Bevorzugt ragt das Halteelement von dem Elektronikdeckel vor und durchragt den Gehäusedeckel. Vorzugsweise wird der Motordeckel zwischen dem Gehäusedeckel und dem Elektronikdeckel axial gehalten. Dabei kann das Halteelement den Motordeckel durchragen oder der Motordeckel kann zwischen dem Gehäusedeckel und dem Elektronikdeckel axial verspannt werden.

Die Gehäusezwischenstruktur begrenzt die Förderkammer vorzugsweise axial an einer ersten Stirnseite und über ihren Umfang. Der Gehäusedeckel kann die Förderkammer an einer zweiten Stirnseite axial begrenzen. In alternativen Ausführungen kann die Gehäusezwischenstruktur die Förderkammer ausschließlich axial stirnseitig begrenzen, während der Gehäusedeckel die Förderkammer axial stirnseitig und umfangseitig begrenzt. Die dem Gehäusedeckel axial zugewandte Stirnseite der Gehäusezwischenstruktur und eine der Gehäusezwischenstruktur axial zugewandte Stirnseite des Gehäusedeckels befinden sich vorzugsweise in direktem Kontakt. Bevorzugt ist in axialer Richtung zwischen dem Gehäusedeckel und der Gehäusezwischenstruktur kein weiteres Bauteil ausgebildet.

Bevorzugt weist die Gehäusezwischenstruktur in der dem Gehäusedeckel zugewandten Stirnseite eine Ausnehmung auf, deren Boden die Förderkammer auf der dem Gehäusedeckel abgewandten Stirnseite begrenzt und deren Umfangswand die Förderkammer umfangseitig umschließt. Der Gehäusedeckel schließt die Förderkammer in derartigen Ausführungen vorzugsweise auf der dem Motordeckel axial abgewandten Stirnseite ab. In alternativen Ausführungen kann der Gehäusedeckel in der der Gehäusezwischenstruktur zugewandten Stirnseite eine Ausnehmung aufweisen, deren Boden die Förderkammer auf der der Gehäusezwischenstruktur abgewandten Stirnseite begrenzt und deren Umfangswand die Förderkammer umfangseitig umschließt. In dem Fall schließt die Gehäusezwischenstruktur die Förderkammer bevorzugt auf der dem Motordeckel axial zugewandten Stirnseite ab.

In der Förderkammer ist ein drehbares Förderglied zur Förderung des Fluids ausgebildet. Das Förderglied wird vorzugsweise über die Antriebswelle drehangetrieben. Das Förderglied ist bevorzugt drehunbeweglich mit der Antriebswelle verbunden. Das Förderglied kann zudem in axialer Richtung verschiebefest mit der Antriebswelle verbunden sein. Bevorzugt ist das Förderglied jedoch in axialer Richtung frei beweglich. Auf diese Weise kann Fertigungsungenauigkeiten und Toleranzen Rechnung getragen werden.

Zwischen dem Förderglied und der Antriebswelle kann eine formschlüssige, reibschlüssige oder stoffschlüssige Verbindung vorherrschen. Eine formschlüssige Verbindung kann beispielsweise durch ein Keilwellenprofil, eine Kerbverzahnung oder durch zusätzliche Elemente wie beispielsweise einer Passfeder, Gleitfeder oder einem Querstift ausgebildet sein. Im Falle einer reibschlüssigen Verbindung kann das Förderglied beispielsweise auf der Antriebswelle aufgeklemmt oder aufgepresst werden. Eine stoffschlüssige Verbindung zwischen der Antriebswelle und dem Förderglied kann beispielsweise durch Kleben, Löten oder Schweißen hergestellt werden.

Das Förderglied wird vorzugsweise durch ein außenverzahntes Innenzahnrad gebildet. In bevorzugten Ausführungen umfasst die Fördereinrichtung wenigstens ein zweites Förderglied, wobei das zweite Förderglied bevorzugt ein innenverzahntes Außenzahnrad ist. Das Förderglied wird vorzugsweise von dem zweiten Förderglied radial außen umgeben. Bevorzugt verlaufen die Rotationsachse des Förderglieds und die Rotationsachse des zweiten Förderglieds in einem Abstand parallel zueinander. Das zweite Förderglied kann somit exzentrisch zu dem ersten Förderglied ausgebildet sein.

Das Förderglied und das zweite Förderglied, insbesondere die Zähne des außenverzahnten Förderglieds und die Zähne des innenverzahnten zweiten Förderglieds, stehen bevorzugt in einem Eingriff miteinander, sodass eine Rotation des Förderglieds auf das zweite Förderglied übertragen werden kann. Zwischen den in Eingriff befindlichen Zähnen können Förderzellen ausgebildet sein, welche bei Rotation des Förderglieds und des zweiten Förderglieds ihr Volumen ändern, sodass Fluid von einer Niederdruckseite der Pumpe zu einer Hochdruckseite der Pumpe gefördert werden kann. Innenzahnradpumpen dieser Art sind dem Fachmann bekannt, weswegen auf eine detaillierte Beschreibung verzichtet werden soll. Die Erfindung soll nicht auf Innenzahnradpumpen beschränkt sein, und es können beispielsweise auch Flügelzellenpumpen oder Außenzahnradpumpen zum Einsatz kommen.

In bevorzugten Ausführungen durchragt die Antriebswelle das Förderglied in axialer Richtung. Besonders bevorzugt durchragt die Antriebswelle das Förderglied in axialer Richtung soweit, dass die Antriebswelle in axialer Richtung über das Förderglied beidseitig hinausragt. Die Antriebswelle kann den Gehäusedeckel und/oder die Gehäusezwischenstruktur durchragen. Bevorzugt durchragt die Antriebswelle die Gehäusezwischenstruktur und ragt in eine Ausnehmung des Gehäusedeckels ohne diesen zu durchragen. Auf diese Weise kann die Antriebswelle von dem Gehäusedeckel und/oder der Gehäusezwischenstruktur gelagert werden. In bevorzugten Ausführungen wird die Antriebswelle in axialer Richtung beidseitig des Förderglieds von dem Gehäusedeckel und der Gehäusezwischenstruktur gelagert.

Der Gehäusedeckel und/oder die Gehäusezwischenstruktur kann oder können ein Gleitlager für die Antriebswelle ausbilden. In bevorzugten Ausführungen bildet oder bilden der Gehäusedeckel und/oder die Gehäusezwischenstruktur ein hydrostatisches Gleitlager oder jeweils ein hydrostatisches Gleitlager für die Antriebswelle. Zu diesem Zweck ist das Gleitlager des Gehäusedeckels und/oder der Gehäusezwischenstruktur fluidkommunizierend mit der Förderkammer, insbesondere mit der Hochdruckseite der Förderkammer, verbunden.

Das Gleitlager des Gehäusedeckels und/oder der Gehäusezwischenstruktur kann oder können einen Radialspalt aufweisen, welcher mit Fluid aus der Förderkammer beaufschlagt werden kann. Der Radialspalt kann um eine Drehachse der Antriebswelle umlaufend ausgebildet sein oder ausschließlich in einem Bereich des Gleitlagers ausgebildet sein. Beispielsweise kann der Radialspalt in Form einer Längsnut, welche sich in Axialrichtung des Gleitlagers erstreckt, ausgebildet sein.

Der Gehäusedeckel weist einen Aufnahmeschacht mit einer Gehäusedeckelumfangswand auf, welche mit einer Umfangswand der Gehäusezwischenstruktur axial überlappt. In dem Aufnahmeschacht des Gehäusedeckels sind der Antriebsmotor und die Gehäusezwischenstruktur angeordnet. Die Gehäusezwischenstruktur ist in axialer Richtung vorzugsweise zwischen dem Gehäusedeckel und dem Antriebsmotor angeordnet. Die Gehäusezwischenstruktur wird von dem Aufnahmeschacht des Gehäusedeckels vorzugsweise radial außen umschlossen.

Bevorzugt stützt sich die Gehäusezwischenstruktur in radialer Richtung, vorzugsweise über 360°, an der Gehäusedeckelumfangswand ab. Zu diesem Zweck hat die Umfangswand der Gehäusezwischenstruktur vorzugsweise in einem ersten Bereich über ihren gesamten Umfang Kontakt mit der Gehäusedeckelumfangswand. Der erste Bereich erstreckt sich vorzugsweise in axialer Richtung wenigstens soweit wie die axiale Erstreckung der Förderkammer. In einem zweiten Bereich kann zwischen der Umfangswand der Gehäusezwischenstruktur und der Gehäusedeckelumfangswand ein Ringspalt ausgebildet sein.

In axialer Richtung stützt sich die Gehäusezwischenstruktur auf der dem Motordeckel axial abgewandten Stirnseite vorzugsweise ebenfalls in dem Aufnahmeschacht des Gehäusedeckels ab. Die dem Gehäusedeckel axial zugewandte Stirnseite der Gehäusezwischenstruktur ist vorzugsweise in Kontakt mit dem der Gehäusezwischenstruktur axial zugewandten Boden des Aufnahmeschachts des Gehäusedeckels.

Der Gehäusedeckel bildet vorzugsweise einen Druckanschluss und einen Sauganschluss für die Förderung von Fluid. Der Druckanschluss und der Sauganschluss können auf der der Gehäusezwischenstruktur axial abgewandten Stirnseite des Gehäusedeckels ausgebildet sein. Der Druckanschluss und der Sauganschluss sind bevorzugt fluidkommunizierend mit der Förderkammer verbunden. In alternativen Ausführungen können der Druckanschluss und der Sauganschluss auch radial außen durch den Gehäusedeckel ausgebildet sein.

Insbesondere sind der Druckanschluss und der Sauganschluss über einen Förderkammereinlass und einen Förderkammerauslass fluidkommunizierend mit der Förderkammer verbunden. Der Förderkammereinlass und der Förderkammerauslass sind bevorzugt ebenfalls durch den Gehäusedeckel ausgebildet. Der Förderkammereinlass und der Förderkammerauslass sind vorzugsweise auf der der Gehäusezwischenstruktur axial zugewandten Stirnseite des Gehäusedeckels ausgebildet.

Wenigstens der Druckanschluss kann von einer Dichtung, insbesondere einer Radialdichtung, umgeben sein. Bevorzugt sind der Sauganschluss und der Druckanschluss jeweils von einer Dichtung radial umgeben. In bevorzugten Ausführungen umgibt die Dichtung des Sauganschlusses sowohl den Sauganschluss als auch den Druckanschluss. Die Dichtung des Druckanschlusses und die Dichtung des Sauganschluss können als eine gemeinsame Dichtung oder als einzelne Dichtungen ausgebildet sein. In besonders bevorzugten Ausführungen dient die Dichtung des Sauganschlusses der Abdichtung von Druckanschluss und Sauganschluss gegenüber der Umgebung, während die Dichtung des Druckanschlusses der Abdichtung des Druckanschlusses von dem Sauganschluss dient.

Der Gehäusedeckel ist vorzugsweise einstückig ausgebildet. Einstückig im Sinne der Erfindung bedeutet, dass ein Bauteil, insbesondere der Gehäusedeckel, nicht zerstörungsfrei in zwei separate Teile getrennt werden kann. Somit stellen vor allem form- und/oder kraftschlüssig miteinander gefügte Teile, insbesondere miteinander verschraubte Teile, kein einstückiges Bauteil im Sinne der Erfindung dar. In bevorzugten Ausführungen ist der Gehäusedeckel in einem Verfahren der Urformung oder Umformung geformt oder besteht aus stoffschlüssig gefügten Teilen. Der Gehäusedeckel kann beispielsweise mittels Gießen, Tiefziehen oder Sintern hergestellt sein. In bevorzugten Ausführungen handelt es sich bei dem Gehäusedeckel um ein aus Metall gegossenes Bauteil.

In bevorzugten Ausführungen ist auch die Gehäusezwischenstruktur einstückig ausgebildet. Die Gehäusezwischenstruktur ist vorzugsweise in einem Verfahren der Urformung oder Umformung geformt oder besteht aus stoffschlüssig gefügten Teilen. Die Gehäusezwischenstruktur kann beispielsweise mittels Gießen, Tiefziehen oder Sintern hergestellt sein. In bevorzugten Ausführungen handelt es sich bei der Gehäusezwischenstruktur um ein aus Metall gegossenes Bauteil. Die Gehäusezwischenstruktur und der Gehäusedeckel sind bevorzugt separat voneinander ausgebildete Bauteile.

Der Gehäusedeckel und/oder die Gehäusezwischenstruktur sind vorzugsweise aus Metall hergestellt, können aber beispielsweise auch aus Kunststoff hergestellt sein.

Zwischen der Gehäusezwischenstruktur und dem Gehäusedeckel kann eine um eine Drehachse der Antriebswelle umlaufende Freisparungsnut ausgebildet sein. Die Freisparungsnut kann in der dem Gehäusedeckel axial zugewandten Stirnseite der Gehäusezwischenstruktur und/oder in der der Gehäusezwischenstruktur axial zugewandten Stirnseite des Gehäusedeckels gebildet sein. Die radiale Erstreckung der Freisparungsnut in der Gehäusezwischenstruktur und/oder dem Gehäusedeckel ist in Umfangsrichtung bevorzugt überall gleich groß.

Ist die Freisparungsnut in der Gehäusezwischenstruktur und dem Gehäusedeckel ausgebildet, so überlappt die in der Gehäusezwischenstruktur ausgebildete Freisparungsnut in radialer Richtung vorzugsweise vollständig mit der im Gehäusedeckel ausgebildeten Freisparungsnut. In alternativen Ausführungen kann die in der Gehäusezwischenstruktur ausgebildete Freisparungsnut nicht oder teilweise mit der im Gehäusedeckel ausgebildeten Freisparungsnut radial überlappen.

Des Weiteren kann die Freisparungsnut in der Gehäusezwischenstruktur eine andere radiale Erstreckung aufweisen als die Freisparungsnut in dem Gehäusedeckel. Unter der radialen Erstreckung wird die Breite der Freisparungsnut in radialer Richtung verstanden. Bevorzugt weist die Freisparungsnut in der Gehäusezwischenstruktur die gleiche radiale Erstreckung auf wie die Freisparungsnut in dem Gehäusedeckel.

Die Freisparungsnut in dem Gehäusedeckel und/oder der Gehäusezwischenstruktur ist bevorzugt mit dem Sauganschluss der Pumpen-Motor-Einheit fluidkommunizierend verbunden. In bevorzugten Ausführungen überlappt die Freisparungsnut in dem Gehäusedeckel und/oder der Gehäusezwischenstruktur in radialer Richtung mit dem Sauganschluss. Neben einer Gewichtsreduktion kann die Freisparungsnut insbesondere dazu dienen, Kosten bei der Bearbeitung der dem Gehäusedeckel axial zugewandten Stirnseite der Gehäusezwischenstruktur und der der Gehäusezwischenstruktur axial zugewandten Stirnseite des Gehäusedeckels zu reduzieren.

Der Antriebsmotor ist bevorzugt in axialer Richtung zwischen dem Motordeckel und der Gehäusezwischenstruktur in dem Aufnahmeschacht angeordnet. Der Antriebsmotor kann ein Elektromotor mit einem Rotor und einem Stator sein, beispielsweise ein elektrischer Innenläufermotor. Bevorzugt ist der Rotor drehunbeweglich und in axialer Richtung vorzugsweise verschiebefest mit der Antriebswelle verbunden. Vorzugsweise umfasst der Stator Spulen, welche unter Strom gesetzt werden können, wodurch magnetische Felder induziert werden können. Der Rotor weist vorzugsweise Dauermagneten auf, welche durch die magnetischen Felder der Statorspulen angezogen bzw. abgestoßen werden können, wodurch der Rotor und damit die Antriebswelle drehangetrieben wird.

Der Stator des Antriebsmotors kann durch die Gehäusezwischenstruktur und den Motordeckel axial gehalten werden. In bevorzugten Ausführungen stützt sich der Stator in axialer Richtung an der Gehäusezwischenstruktur und dem Motordeckel ab. Bevorzugt ist zwischen dem Stator des Antriebsmotors, insbesondere zwischen einer Außenumfangswand des Stators, und dem Gehäusedeckel, insbesondere der Gehäusedeckelumfangswand, ein Radialspalt ausgebildet. Der Radialspalt umgibt den Stator vorzugsweise um mehr als 180°, besonders bevorzugt über 360°.

Der Antriebsmotor ist bevorzugt in axialer Richtung zwischen der Gehäusezwischenstruktur und dem Motordeckel angeordnet. Vorzugsweise schließt der Motordeckel den Aufnahmeschacht des Gehäusedeckels auf der der Förderkammer axial abgewandten Seite ab, vorzugsweise fluiddicht ab. Der Motordeckel ist vorzugsweise aus Kunststoff hergestellt.

Der Gehäusedeckel weist eine Gehäusedeckelumfangswand auf und der Motordeckel eine Motordeckelumfangswand, wobei die Gehäusedeckelumfangswand und die Motordeckelumfangswand einander axial überlappen können. Bevorzugt ist zwischen dem Motordeckel und dem Gehäusedeckel, insbesondere zwischen der Gehäusedeckelumfangswand und der Motordeckelumfangswand, eine Dichtung, vorzugsweise eine Radialdichtung, ausgebildet. Der Motordeckel kann in axialer Richtung wenigstens teilweise in den Aufnahmeschacht des Gehäusedeckels ragen.

Bei dem Antriebsmotor handelt es sich vorzugsweise um einen nasslaufenden Elektromotor. Zu diesem Zweck ist der Aufnahmeschacht des Gehäusedeckels im Bereich des Antriebsmotors vorzugsweise fluidkommunizierend mit der Förderkammer, insbesondere mit der Hochdruckseite der Förderkammer, verbunden. Der Aufnahmeschacht kann im Bereich des Antriebsmotors mit der Förderkammer über eine Leckage fluidkommunizierend verbunden sein. Die Leckage kann über einen Radialspalt zwischen der Antriebswelle und der Gehäusezwischenstruktur ausgebildet sein.

Der Aufnahmeschacht des Gehäusedeckels ist bevorzugt über das Gleitlager der Gehäusezwischenstruktur mit der Förderkammer verbunden. Bevorzugt kann Fluid aus der Förderkammer in axialer Richtung durch die Gehäusezwischenstruktur an der Antriebswelle vorbei in den Aufnahmeschacht des Gehäusedeckels im Bereich des Antriebsmotors strömen.

Der Aufnahmeschacht kann im Bereich des Antriebsmotors mit dem Sauganschluss der Pumpen-Motor-Einheit fluidkommunizierend verbunden sein. Auf diese Weise kann Fluid aus dem Aufnahmeschacht im Bereich des Antriebsmotors abfließen. Der Antriebsmotor kann auf diese Weise während des Betriebs kontinuierlich umspült und gekühlt werden. Der Aufnahmeschacht ist im Bereich des Antriebsmotors vorzugsweise ebenfalls mit dem Förderkammereinlass fluidkommunizierend verbunden. Auf diese Weise kann die Förderkammer, wenn der Aufnahmeschacht im Bereich des Antriebsmotors mit der Hochdruckseite der Förderkammer verbunden ist, vorgeladen werden. Das bedeutet, dass Fluid, welches durch die Rotation des Förderglieds angesaugt wird, vorzugsweise einen höheren Ausgangsdruck aufweist.

Bevorzugt ist der Aufnahmeschacht im Bereich des Antriebsmotors mit dem Sauganschluss der Pumpen-Motor-Einheit über einen Verbindungskanal fluidkommunizierend verbunden. Der Verbindungskanal kann in Form eines Durchgangs durch die Gehäusezwischenstruktur ausgebildet sein. In alternativen Ausführungen kann der Verbindungskanal beispielsweise durch eine Ausnehmung am radial äußeren Umfang der Gehäusezwischenstruktur oder durch einen Kanal im Gehäusedeckel ausgebildet sein. Ist zwischen der Gehäusezwischenstruktur und dem Gehäusedeckel eine Freisparungsnut ausgebildet, so überlappt der Verbindungskanal in radialer Richtung vorzugsweise mit der Freisparungsnut.

Die Pumpen-Motor-Einheit umfasst vorzugsweise einen Elektronikdeckel, der auf der dem Antriebsmotor axial abgewandten Seite des Motordeckels stirnseitig angeordnet ist. Der Motordeckel und der Elektronikdeckel bilden vorzugsweise ein Elektronikraum aus, welcher in axialer Richtung von dem Elektronikdeckel und/oder dem Motordeckel begrenzt wird. Der Elektronikraum wird bevorzugt axial an beiden Stirnseiten und radial umfangseitig von dem Elektronikdeckel und dem Motordeckel begrenzt.

Der Elektronikdeckel begrenzt den Elektronikraum vorzugsweise axial stirnseitig und umfangseitig und der Motordeckel begrenzt den Elektronikraum vorzugsweise axial stirnseitig. Der Motordeckel schließt den Elektronikraum bevorzugt auf der dem Antriebsmotor axial zugewandten Seite ab, vorzugsweise fluiddicht ab.

Der Elektronikdeckel kann eine Elektronikdeckelumfangswand aufweisen, welche mit der Motordeckelumfangswand in axialer Richtung überlappt. Vorzugsweise umschließt die Elektronikdeckelumfangswand die Motordeckelumfangswand radial außen. Bevorzugt ist zwischen dem Motordeckel und dem Elektronikdeckel, insbesondere zwischen der Motordeckelumfangswand und der Elektronikdeckelumfangswand, eine Dichtung ausgebildet. Die Dichtung ist vorzugsweise als Radialdichtung ausgebildet. Der Motordeckel kann in eine Ausnehmung des Elektronikdeckels axial hineinragen.

In dem Elektronikraum ist vorzugsweise eine Steuerungselektronik ausgebildet. Die Steuerungselektronik ist vorzugsweise in axialer Richtung zwischen dem Motordeckel und dem Elektronikdeckel ausgebildet. Die Steuerungselektronik kann beispielsweise den Antriebsmotor steuern. Die Steuerungselektronik wird vorzugsweise von dem Elektronikdeckel radial außen umgeben. Die dem Elektronikdeckel axial gegenüberliegende Rückseite der Steuerungselektronik ist vorzugsweise mit dem Elektronikdeckel wärmeleitend verbunden. Vorzugsweise ist die Steuerungselektronik mit dem Elektronikdeckel mittels einer Wärmeleitpaste wärmeleitend verbunden.

Der Elektronikdeckel kann auf der dem Antriebsmotor axial abgewandten Stirnseite Kühlelemente, insbesondere Kühlrippen, zur Kühlung der Pumpen-Motor-Einheit und insbesondere zur Kühlung der Steuerungselektronik der Pumpen-Motor-Einheit umfassen. Die Kühlrippen sind vorzugsweise aus Metall gebildet.

Der Elektronikdeckel und die Kühlelemente können zusammen einstückig ausgebildet sein. Bevorzugt sind der Elektronikdeckel und die Kühlelemente in einem Verfahren der Urformung oder Umformung geformt oder bestehen aus stoffschlüssig gefügten Teilen. In alternativen Ausführungen werden die Kühlelemente mit dem Elektronikdeckel in einem weiteren Herstellungsschritt gefügt. So können die Kühlelemente beispielsweise von dem Elektronikdeckel umgossen werden oder mit dem Elektronikdeckel verklebt, verschweißt oder gelötet werden. Auf diese Weise könnten die Kühlelemente ein anderes Material als der Elektronikdeckel aufweisen. Vorzugsweise sind der Elektronikdeckel und die Kühlrippen aus dem gleichen Material gebildet.

Auch in den nachstehend formulierten Aspekten werden Merkmale der Erfindung beschrieben. Die Aspekte sind in der Art von Ansprüchen formuliert und können diese ersetzen. In den Aspekten offenbarte Merkmale können die Ansprüche ferner ergänzen und/oder relativieren, Alternativen zu einzelnen Merkmalen aufzeigen und/oder Anspruchsmerkmale erweitern. In Klammern gesetzte Bezugszeichen beziehen sich nachfolgend auf in Figuren illustrierte Ausführungsbeispiele der Erfindung. Sie schränken die in den Aspekten beschriebenen Merkmale nicht unter den Wortsinn als solchen ein, zeigen andererseits jedoch bevorzugte Möglichkeiten der Verwirklichung des jeweiligen Merkmals auf.
Aspekt 1. Pumpen-Motor-Einheit zur Förderung eines Fluids, beispielsweise zur Förderung von Getriebeöl und/oder Schmieröl bei Kraftfahrzeugen, die Folgendes umfasst:
   1.1 ein Gehäuse, das einen Gehäusedeckel (1), eine Gehäusezwischenstruktur (12) und einen Motordeckel (2) umfasst, wobei der Gehäusedeckel (1) und die Gehäusezwischenstruktur (12) eine Förderkammer axial an beiden Stirnseiten und radial umfangseitig begrenzen,
   1.2 eine Fördereinrichtung (10) mit einem in der Förderkammer drehbaren Förderglied (13, 14) zur Förderung des Fluids
   1.3 und einem Antriebsmotor (20), der über eine Antriebswelle (4) mit der Fördereinrichtung (10) verbunden ist,
   dadurch gekennzeichnet, dass
   1.4 der Gehäusedeckel (1) einen Aufnahmeschacht (11) bildet, und
   1.5 der Antriebsmotor (20) und die Gehäusezwischenstruktur (12) in dem Aufnahmeschacht (11) angeordnet sind.
Aspekt 2. Pumpen-Motor-Einheit nach dem vorhergehenden Aspekt, dadurch gekennzeichnet, dass die Gehäusezwischenstruktur (12) die Förderkammer axial stirnseitig und umfangseitig begrenzt und der Gehäusedeckel (1) die Förderkammer axial stirnseitig begrenzt.
Aspekt 3. Pumpen-Motor-Einheit nach einem der vorhergehenden Aspekte, dadurch gekennzeichnet, dass der Gehäusedeckel (1) die Förderkammer auf der dem Motordeckel (2) axial abgewandten Seite stirnseitig abschließt.
Aspekt 4. Pumpen-Motor-Einheit nach einem der vorhergehenden Aspekte, dadurch gekennzeichnet, dass der Gehäusedeckel (1) eine Gehäusedeckelumfangswand und die Gehäusezwischenstruktur (12) eine Gehäusezwischenstrukturumfangswand aufweisen, wobei die Gehäusedeckelumfangswand und die Gehäusezwischenstrukturumfangswand axial überlappen.
Aspekt 5. Pumpen-Motor-Einheit nach einem der vorhergehenden Aspekte, dadurch gekennzeichnet, dass der Aufnahmeschacht (11) die Gehäusezwischenstruktur (12) radial außen umschließt.
Aspekt 6. Pumpen-Motor-Einheit nach einem der vorhergehenden Aspekte, dadurch gekennzeichnet, dass die Gehäusezwischenstruktur (12) in dem Aufnahmeschacht (11) des Gehäusedeckels (1) radial und/oder axial abgestützt ist.
Aspekt 7. Pumpen-Motor-Einheit nach einem der vorhergehenden Aspekte, dadurch gekennzeichnet, dass der Gehäusedeckel (1) einen Druckanschluss (5) und einen Sauganschluss (6) ausbildet.
Aspekt 8. Pumpen-Motor-Einheit nach einem der vorhergehenden Aspekte, dadurch gekennzeichnet, dass der Gehäusedeckel (1) einen Druckanschluss (5) und einen Sauganschluss (6) ausbildet, und dass der Druckanschluss (5) und der Sauganschluss (6) in der der Förderkammer axial abgewandten Stirnseite des Gehäusedeckels (1) ausgebildet sind.
Aspekt 9. Pumpen-Motor-Einheit nach einem der vorhergehenden Aspekte, dadurch gekennzeichnet, dass der Gehäusedeckel (1) einen Förderkammereinlass und einen Förderkammerauslass ausbildet.
Aspekt 10. Pumpen-Motor-Einheit nach einem der vorhergehenden Aspekte, dadurch gekennzeichnet, dass der Gehäusedeckel (1) einen Förderkammereinlass und einen Förderkammerauslass ausbildet, und dass der Förderkammereinlass und der Förderkammerauslass in der der Förderkammer axial zugewandten Stirnseite des Gehäusedeckels (1) ausgebildet sind.
Aspekt 11. Pumpen-Motor-Einheit nach einem der vorhergehenden Aspekte, dadurch gekennzeichnet, dass der Gehäusedeckel (1) einstückig ist.
Aspekt 12. Pumpen-Motor-Einheit nach einem der vorhergehenden Aspekte, dadurch gekennzeichnet, dass der Gehäusedeckel (1) in einem Verfahren der Urformung oder Umformung geformt ist oder aus stoffschlüssig gefügten Teilen besteht.
Aspekt 13. Pumpen-Motor-Einheit nach einem der vorhergehenden Aspekte, dadurch gekennzeichnet, dass die Gehäusezwischenstruktur (12) und der Gehäusedeckel (1) separat voneinander ausgebildete Bauteile sind.
Aspekt 14. Pumpen-Motor-Einheit nach einem der vorhergehenden Aspekte, dadurch gekennzeichnet, dass der Antriebsmotor (20) in axialer Richtung zwischen dem Motordeckel (2) und der Gehäusezwischenstruktur (12) angeordnet ist.
Aspekt 15. Pumpen-Motor-Einheit nach einem der vorhergehenden Aspekte, dadurch gekennzeichnet, dass der Antriebsmotor (20) ein Elektromotor, beispielsweise ein elektrischer Innenläufermotor, mit einem Rotor (24) und einem Stator (23) ist und der Rotor (24) drehunbeweglich und in axialer Richtung vorzugsweise verschiebefest mit der Antriebswelle (4) verbunden ist.
Aspekt 16. Pumpen-Motor-Einheit nach einem der vorhergehenden Aspekte, dadurch gekennzeichnet, dass das Förderglied (14) über die Antriebswelle (4) drehangetrieben wird.
Aspekt 17. Pumpen-Motor-Einheit nach einem der vorhergehenden Aspekte, dadurch gekennzeichnet, dass das Förderglied (14) drehunbeweglich und in axialer Richtung vorzugsweise verschiebefest mit der Antriebswelle (4) verbunden ist.
Aspekt 18. Pumpen-Motor-Einheit nach einem der vorhergehenden Aspekte, dadurch gekennzeichnet, dass das Förderglied (14) ein außenverzahntes Innenzahnrad (14) ist.
Aspekt 19. Pumpen-Motor-Einheit nach einem der vorhergehenden Aspekte, dadurch gekennzeichnet, dass das Förderglied (14) ein außenverzahntes Innenzahnrad (14) ist und die Fördereinrichtung (10) wenigstens ein zweites Förderglied (13) umfasst, wobei das zweite Förderglied (13) ein innenverzahntes Außenzahnrad (13) ist, welches das Innenzahnrad (14) umgibt.
Aspekt 20. Pumpen-Motor-Einheit nach einem der vorhergehenden Aspekte, dadurch gekennzeichnet, dass ein Stator (23) des Antriebsmotors (20) durch die Gehäusezwischenstruktur (12) und den Motordeckel (2) axial gehalten wird.
Aspekt 21. Pumpen-Motor-Einheit nach dem vorhergehenden Aspekt, dadurch gekennzeichnet, dass sich der Stator (23) in axialer Richtung an der Gehäusezwischenstruktur (12) und dem Motordeckel (2) abstützt.
Aspekt 22. Pumpen-Motor-Einheit nach einem der vorhergehenden Aspekte, dadurch gekennzeichnet, dass zwischen einem Stator (23) des Antriebsmotors (20) und dem Gehäusedeckel (1) ein Radialspalt ausgebildet ist.
Aspekt 23. Pumpen-Motor-Einheit nach dem vorhergehenden Aspekt, dadurch gekennzeichnet, dass der Radialspalt den Stator über 360° umgibt.
Aspekt 24. Pumpen-Motor-Einheit nach einem der vorhergehenden Aspekte, dadurch gekennzeichnet, dass der Motordeckel (2) den Aufnahmeschacht (11) des Gehäusedeckels (1) auf der der Förderkammer axial abgewandten Seite abschließt, vorzugsweise fluiddicht abschließt.
Aspekt 25. Pumpen-Motor-Einheit nach einem der vorhergehenden Aspekte, dadurch gekennzeichnet, dass der Gehäusedeckel (1) eine Gehäusedeckelumfangswand und der Motordeckel (2) eine Motordeckelumfangswand aufweisen, wobei die Gehäusedeckelumfangswand und die Motordeckelumfangswand einander axial überlappen, und dass zwischen dem Motordeckel (2) und dem Gehäusedeckel (1) wenigstens eine Dichtung (25), vorzugsweise eine Radialdichtung, ausgebildet ist, um den Aufnahmeschacht (11) fluiddicht abzudichten.
Aspekt 26. Pumpen-Motor-Einheit nach dem vorhergehenden Aspekt, dadurch gekennzeichnet, dass der Motordeckel (2) in axialer Richtung wenigstens teilweise in den Aufnahmeschacht (11) des Gehäusedeckels (1) ragt.
Aspekt 27. Pumpen-Motor-Einheit nach einem der vorhergehenden Aspekte, dadurch gekennzeichnet, dass der Aufnahmeschacht (11) im Bereich des Antriebsmotors (20) mit einem Sauganschluss (6) der Pumpen-Motor-Einheit über einen Verbindungskanal (16) fluidkommunizierend verbunden ist und der Verbindungskanal (16) in Form eines Durchgangs durch die Gehäusezwischenstruktur (12) ausgebildet ist.
Aspekt 28. Pumpen-Motor-Einheit nach einem der vorhergehenden Aspekte, dadurch gekennzeichnet, dass der Aufnahmeschacht (11) im Bereich des Antriebsmotors (20) mit einem Förderkammeinlass über einen Verbindungskanal (16) fluidkommunizierend verbunden ist.
Aspekt 29. Pumpen-Motor-Einheit nach einem der vorhergehenden Aspekte, dadurch gekennzeichnet, dass zwischen der Gehäusezwischenstruktur (12) und dem Gehäusedeckel (1) um eine Drehachse der Antriebswelle (4) umlaufend ein Freisparungsnut (17) ausgebildet ist.
Aspekt 30. Pumpen-Motor-Einheit nach dem vorhergehenden Aspekt, dadurch gekennzeichnet, dass die Freisparungsnut (17) in der dem Gehäusedeckel (1) axial zugewandten Stirnseite der Gehäusezwischenstruktur (12) und/oder die Freisparungsnut (17) in der der Gehäusezwischenstruktur (12) axial zugewandten Stirnseite des Gehäusedeckels (1) ausgebildet ist.
Aspekt 31. Pumpen-Motor-Einheit nach einem der vorhergehenden Aspekte, dadurch gekennzeichnet, dass zwischen der Gehäusezwischenstruktur (12) und dem Gehäusedeckel (1) um eine Drehachse der Antriebswelle (4) umlaufend eine Freisparungsnut (17) ausgebildet ist, und dass die Freisparungsnut (17) mit einem Sauganschluss (6) der Pumpen-Motor-Einheit fluidkommunizierend verbunden ist.
Aspekt 32. Pumpen-Motor-Einheit nach einem der vorhergehenden Aspekte, dadurch gekennzeichnet, dass der Gehäusedeckel (1) und/oder die Gehäusezwischenstruktur (12) die Antriebswelle (4) lagert oder gemeinsam lagern.
Aspekt 33. Pumpen-Motor-Einheit nach dem vorhergehenden Aspekt, dadurch gekennzeichnet, dass der Gehäusedeckel (1) und/oder die Gehäusezwischenstruktur (12) ein Gleitlager oder jeweils ein Gleitlager für die Antriebswelle (4) bildet oder bilden.
Aspekt 34. Pumpen-Motor-Einheit nach dem vorhergehenden Aspekt, dadurch gekennzeichnet, dass der Gehäusedeckel (1) und/oder die Gehäusezwischenstruktur (12) ein hydrostatisches Gleitlager oder jeweils ein hydrostatisches Gleitlager für die Antriebswelle (4) bildet oder bilden.
Aspekt 35. Pumpen-Motor-Einheit nach einem der vorhergehenden Aspekte, dadurch gekennzeichnet, dass die Pumpen-Motor-Einheit einen Elektronikdeckel (3) umfasst, der auf der dem Antriebsmotor (20) axial abgewandten Seite des Motordeckels (2) stirnseitig angeordnet ist, und dass zwischen dem Motordeckel (2) und dem Elektronikdeckel (3) ein Elektronikraum ausgebildet ist, welcher in axialer Richtung von dem Elektronikdeckel (3) und/oder dem Motordeckel (2) begrenzt wird und in welchem eine Steuerungselektronik (32) ausgebildet ist.
Aspekt 36. Pumpen-Motor-Einheit nach dem vorhergehenden Aspekt, dadurch gekennzeichnet, dass der Elektronikdeckel (3) und/oder der Motordeckel (2) die Steuerungselektronik (32) radial außen umgibt, und dass zwischen dem Elektronikdeckel (3) und dem Motordeckel (2) wenigstens eine Dichtung (35), vorzugsweise Radialdichtung, ausgebildet ist, um den Elektronikraum fluiddicht abzudichten.
Aspekt 37. Pumpen-Motor-Einheit nach einem der zwei vorhergehenden Aspekte, dadurch gekennzeichnet, dass die Steuerungselektronik (32) in axialer Richtung zwischen dem Motordeckel (2) und dem Elektronikdeckel (3) ausgebildet ist.
Aspekt 38. Pumpen-Motor-Einheit nach einem der drei vorhergehenden Aspekte, dadurch gekennzeichnet, dass der Elektronikdeckel (3) die Steuerungselektronik (32) radial außen umgibt.
Aspekt 39. Pumpen-Motor-Einheit nach einem der vier vorhergehenden Aspekte, dadurch gekennzeichnet, dass die dem Elektronikdeckel (3) axial gegenüberliegende Rückseite der Steuerungselektronik (32) mit dem Elektronikdeckel (3) wärmeleitend, vorzugsweise mittels Wärmeleitpaste, verbunden ist.
Aspekt 40. Pumpen-Motor-Einheit nach einem der fünf vorhergehenden Aspekte, dadurch gekennzeichnet, dass der Elektronikdeckel (3) Kühlelemente, insbesondere Kühlrippen, zur Kühlung der Pumpen-Motor-Einheit umfasst.
Aspekt 41. Pumpen-Motor-Einheit nach einem der vorhergehenden Aspekte, dadurch gekennzeichnet, dass der Motordeckel (2) und/oder der Gehäusedeckel (1) aus Kunststoff hergestellt sind oder ist.
Aspekt 42. Pumpen-Motor-Einheit nach einem der vorhergehenden Aspekte, dadurch gekennzeichnet, dass die Gehäusezwischenstruktur (12) und/oder der Gehäusedeckel (1) aus Metall hergestellt sind oder ist.
Aspekt 43. Pumpen-Motor-Einheit nach einem der vorhergehenden Aspekte, dadurch gekennzeichnet, dass der Aufnahmeschacht (11) im Bereich des Antriebsmotors (20) mit der Förderkammer über eine Leckage fluidkommunizierend verbunden ist.
Aspekt 44. Pumpen-Motor-Einheit nach dem vorhergehenden Aspekt, dadurch gekennzeichnet, dass die Leckage über einen Radialspalt zwischen der Antriebswelle (4) und der Gehäusezwischenstruktur (12) entsteht.
Aspekt 45. Pumpen-Motor-Einheit nach dem vorhergehenden Aspekt, dadurch gekennzeichnet, dass die Leckage gleichzeitig der Schmierung eines Gleitlagers der Antriebswelle (4) dient, und dass das Gleitlager von der Gehäusezwischenstruktur (12) gebildet wird.

Die Erfindung wird nachfolgend anhand von Ausführungsbeispielen erläutert. An den Ausführungsbeispielen offenbarte Merkmale bilden die Gegenstände der Ansprüche und auch die vorstehenden erläuterten Ausgestaltungen vorteilhaft weiter.

Es zeigen:
- Figur 1: Querschnitt der Pumpen-Motor-Einheit längs der Antriebswelle,
- Figur 2: Querschnitt der Pumpen-Motor-Einheit durch eine zweite Schnittebene,
- Figur 3: isometrische Ansicht der Pumpen-Motor-Einheit.

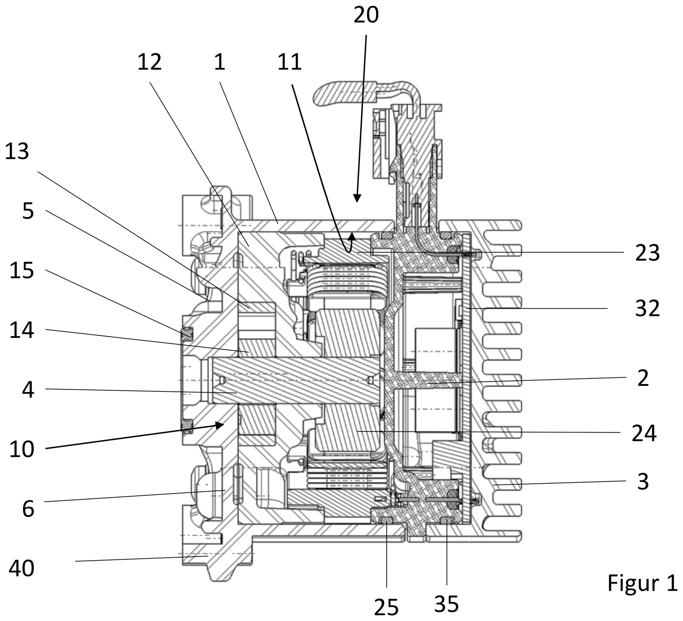

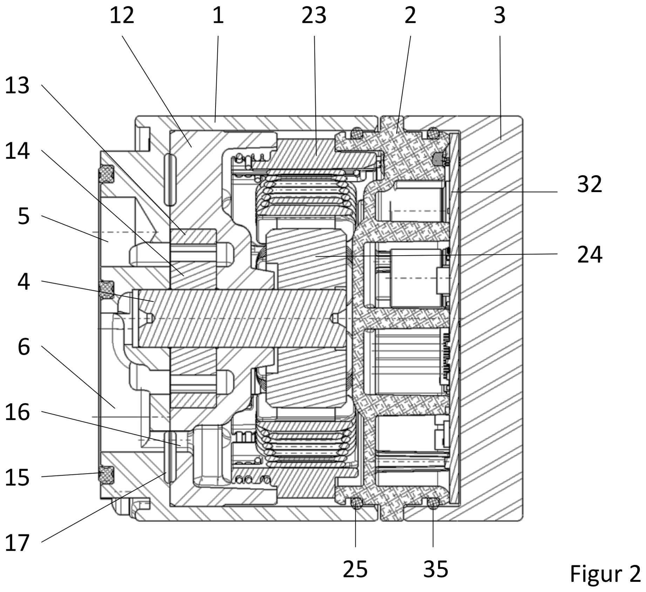

Die Figuren 1 und 2 zeigen jeweils einen Querschnitt durch die Pumpen-Motor-Einheit längs der Antriebswelle 4, wobei die Schnittebenen der beiden Figuren senkrecht aufeinander stehen. Die Pumpen-Motor-Einheit umfasst ein Gehäuse mit einem Gehäusedeckel 1, einer Gehäusezwischenstruktur 12 und einem Motordeckel 2, wobei der Gehäusedeckel 1 und die Gehäusezwischenstruktur 12 eine Förderkammer axial an beiden Stirnseiten und radial umfangseitig begrenzen. Des Weiteren umfasst die Pumpen-Motor-Einheit eine Fördereinrichtung 10 mit einem in der Förderkammer drehbaren Förderglied 13, 14 zur Förderung eines Fluids und einen Antriebsmotor 20, der über eine Antriebswelle 4 mit der Fördereinrichtung 10 verbunden ist. Der Gehäusedeckel 1 und die Gehäusezwischenstruktur 12 werden durch separat voneinander ausgebildete Bauteile gebildet.

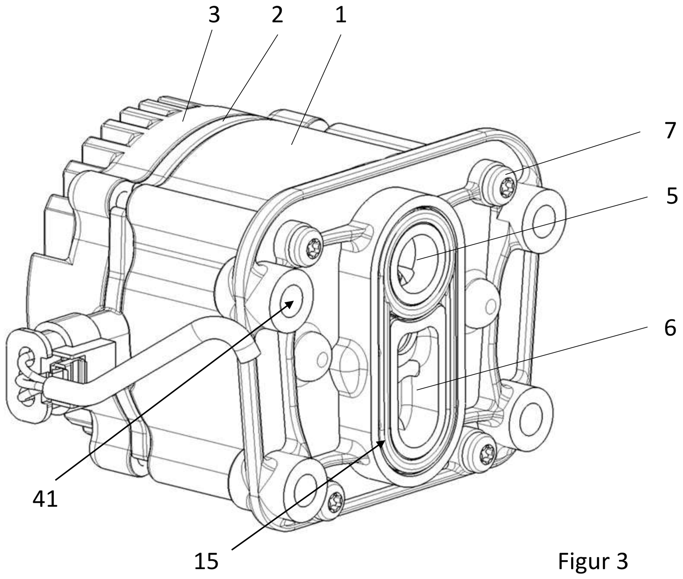

Wie in Figur 1 zu sehen, weist die Pumpen-Motor-Einheit eine Montagestruktur 40 auf, welche von dem Gehäusedeckel 1 ausgebildet ist. Die Montagestruktur 40 ragt radial von der Gehäusedeckelumfangswand vor und weist, wie in Figur 3 zu sehen ist, Durchgänge 41 für Befestigungselemente auf. Mittels der Montagestruktur 40 kann die Pumpen-Motor-Einheit beispielsweise bei Montage in einem Montageschacht eines Getriebes befestigt werden. Bei der erfindungsgemäßen Pumpen-Motor-Einheit handelt es sich vorzugsweise um eine außenliegende Pumpen-Motor-Einheit, welche nicht zur Aufnahme in einem Montageschacht vorgesehen ist und beispielsweise von außen an ein Getriebe angeschraubt werden kann. Dem Fachmann sind eine Vielzahl von Möglichkeiten der Montage und insbesondere der Befestigung von Pumpen-Motor-Einheiten bekannt, sodass an dieser Stelle nicht weiter darauf eingegangen wird. So muss die erfindungsgemäße Pumpen-Motor-Einheit nicht über Befestigungselemente befestigt werden, sondern könnte beispielsweise auch über die Montagestruktur verklebt oder verklemmt werden.

Der Gehäusedeckel 1 des Gehäuses der Pumpen-Motor-Einheit ist einstückig ausgebildet. Vorzugsweise wird der Gehäusedeckel 1 in einem Verfahren der Urformung oder Umformung geformt oder besteht aus stoffschlüssig gefügten Teilen. Vorzugsweise ist der Gehäusedeckel 1 aus Metall urgeformt. Der Gehäusedeckel 1 des Gehäuses der Pumpen-Motor-Einheit weist einen Aufnahmeschacht 11 auf, in welchem die Gehäusezwischenstruktur 12 angeordnet ist. Auf diese Weise umschließt der Gehäusedeckel 1 und insbesondere der Aufnahmeschacht 11 des Gehäusedeckels 1 die Gehäusezwischenstruktur 12 radial außen. Die Gehäusezwischenstruktur 12 ist in dem Aufnahmeschacht 11 des Gehäusedeckels 1 radial und axial abgestützt. Die Gehäusezwischenstruktur 12 stützt sich dabei mit einer dem Gehäusedeckel 1 zugewandten Stirnseite am Boden des Aufnahmeschachts 11 axial ab.

Neben der Gehäusezwischenstruktur 12 ist auch der Antriebsmotor 20 in dem Aufnahmeschacht 11 des Gehäusedeckels 1 angeordnet, sodass der Aufnahmeschacht 11 auch den Antriebsmotor 20 radial außen umschließt. Die Gehäusezwischenstruktur 12 ist in axialer Richtung zwischen dem Gehäusedeckel 1 und dem Antriebsmotor 20 angeordnet.

Die Gehäusezwischenstruktur 12 und der Gehäusedeckel 1 begrenzen die Förderkammer axial an beiden Stirnseiten und radial umfangseitig. Die Gehäusezwischenstruktur 12 begrenzt die Förderkammer an einer ersten Stirnseite der Förderkammer und radial umfangseitig, und der Gehäusedeckel 1 begrenzt die Förderkammer an einer zweiten Stirnseite. Die Gehäusezwischenstruktur 12 weist eine Ausnehmung auf, in welcher die Förderkammer ausgebildet ist und welche die Förderkammer stirnseitig und umfangseitig begrenzt.

Der Gehäusedeckel 1 bildet einen Druckanschluss 5 und einen Sauganschluss 6 aus. Sowohl der Druckanschluss 5 als auch der Sauganschluss 6 sind in der der Förderkammer axial abgewandten Stirnseite des Gehäusedeckels 1 ausgebildet. Der Druckanschluss 5 ist mit einem Förderkammerauslass fluidkommunizierend verbunden, und der Sauganschluss 6 ist mit einem Förderkammereinlass fluidkommunizierend verbunden. Der Förderkammerauslass und der Förderkammereinlass sind in dem Gehäusedeckel 1 in der der Förderkammer axial zugewandten Stirnseite des Gehäusedeckels 1 ausgebildet, vorzugsweise in Form einer Druckniere und einer Saugniere.

Zwischen der Gehäusezwischenstruktur 12 und dem Gehäusedeckel 1 ist eine um eine Drehachse der Antriebswelle 4 umlaufende Freisparungsnut 17 ausgebildet. Die Freisparungsnut 17 ist in der dem Gehäusedeckel 1 axial zugewandten Stirnseite der Gehäusezwischenstruktur 12 und in der der Gehäusezwischenstruktur 12 axial zugewandten Stirnseite des Gehäusedeckels 1 ausgebildet. Die in der Gehäusezwischenstruktur 12 ausgebildete Freisparungsnut 17 überlappt in radialer Richtung vorzugsweise vollständig mit der in dem Gehäusedeckel 1 ausgebildeten Freisparungsnut 17. Die Freisparungsnut 17 in der Gehäusezwischenstruktur 12 kann sich in radialer Richtung weniger weit oder weiter erstrecken als die Freisparungsnut 17 in dem Gehäusedeckel 1. Vorzugsweise erstreckt sich die Freisparungsnut 17 in der Gehäusezwischenstruktur 12 in radialer Richtung ungefähr gleich weit wie die Freisparungsnut 17 in dem Gehäusedeckel 1. Die Freisparungsnut 17 ist mit dem Sauganschluss 6 der Pumpen-Motor-Einheit vorzugsweise fluidkommunizierend verbunden. Neben einer Gewichtsreduktion dient die Freisparungsnut 17 insbesondere dazu, Kosten bei der Bearbeitung der dem Gehäusedeckel 1 zugewandten Stirnseite der Gehäusezwischenstruktur 12 und der der Gehäusezwischenstruktur 12 zugewandten Stirnseite des Gehäusedeckels 1 zu reduzieren.

In der Förderkammer ist das Förderglied 13, 14 drehbar angeordnet. Das Förderglied 14 wird durch ein außenverzahntes Innenzahnrad gebildet, welches von einem zweiten Förderglied 13 umgeben wird, welches durch ein innenverzahntes Zahnrad gebildet ist. Die Rotationsachse des ersten Förderglieds 14 und die Rotationsachse des zweiten Förderglieds 13 verlaufen in einem Abstand parallel zueinander. Das Förderglied 14 und das zweite Förderglied 13, insbesondere die Zähne des außenverzahnten Förderglieds 14 und die Zähne des innenverzahnten zweiten Förderglieds 13, befinden sich in einem Eingriff, sodass eine Rotation des Förderglieds 14 auf das zweite Förderglied 13 übertragen wird. Zwischen den im Eingriff befindlichen Zähnen des Förderglieds 14 und des zweiten Förderglieds 13 sind Förderzellen ausgebildet, welche sich in Umfangsrichtung in ihrem Volumen ändern, sodass Fluid von einer Niederdruckseite der Pumpe zu einer Hochdruckseite der Pumpe gefördert werden kann. Innenzahnradpumpen dieser Art sind dem Fachmann bekannt, weswegen auf eine detaillierte Beschreibung verzichtet werden soll. Die Erfindung ist explizit nicht auf Innenzahnradpumpen beschränkt und es können beispielsweise auch Flügelzellenpumpen oder Außenzahnradpumpen zum Einsatz kommen.

Das Förderglied 14 ist drehunbeweglich mit der Antriebswelle 4 verbunden und kann in axialer Richtung ebenfalls verschiebefest mit der Antriebswelle 4 verbunden sein. Vorzugsweise ist das Förderglied 14 mit der Antriebswelle 4 drehunbeweglich verbunden und in axialer Richtung auf der Antriebswelle 4 verschiebbar. Das Förderglied 14 wird durch die Antriebswelle 4 drehangetrieben. Die Antriebswelle 4 durchragt sowohl das Förderglied 14 als auch das zweite Förderglied 13 in axialer Richtung und ragt sowohl von dem Förderglied 14 als auch von dem zweiten Förderglied 13 in axialer Richtung beidseitig vor.

Die Antriebswelle 4 wird von dem Gehäusedeckel 1 und der Gehäusezwischenstruktur 12 gelagert, wobei das Förderglied 14 zwischen der Lagerstelle des Gehäusedeckels 1 und der Lagerstelle der Gehäusezwischenstruktur 12 angeordnet ist. Der Gehäusedeckel 1 und die Gehäusezwischenstruktur 12 bilden jeweils ein Gleitlager für die Antriebswelle 4 aus.

Das Gleitlager der Gehäusezwischenstruktur 12 ist über eine Leckage mit der Förderkammer fluidkommunizierend verbunden. Die Leckage entsteht vorzugsweise über einen Radialspalt zwischen der Antriebswelle 4 und der Gehäusezwischenstruktur 12 im Bereich der Lagerstelle der Gehäusezwischenstruktur 12 für die Antriebswelle 4. Der Radialspalt kann die Antriebswelle 4 in Umfangsrichtung über einen bestimmten Winkel oder über 360° umgeben. Vorzugsweise ist das Gleitlager der Gehäusezwischenstruktur 12 fluidkommunizierend mit der Hochdruckseite der Förderkammer verbunden, sodass Druckfluid aus der Förderkammer in das Gleitlager der Gehäusezwischenstruktur 12 gelangt. In bevorzugten Ausführungen ist auch das Gleitlager des Gehäusedeckels 1 fluidkommunizierend mit der Förderkammer verbunden, besonders bevorzugt ist das Gleitlager des Gehäusedeckels 1 fluidkommunizierend mit der Hochdruckseite der Förderkammer verbunden.

Der Antriebsmotor 20 der Pumpen-Motor-Einheit ist ein Elektromotor, insbesondere ein elektrischer Innenläufermotor, mit einem Rotor 24 und einem Stator 23, wobei der Rotor 24 drehunbeweglich und in axialer Richtung vorzugsweise verschiebefest mit der Antriebswelle 4 verbunden ist. Der Antriebsmotor 20 ist in dem Aufnahmeschacht 11 des Gehäusedeckels 1 angeordnet. Der Stator 23 des Antriebsmotors 20 wird durch die Gehäusezwischenstruktur 12 und den Motordeckel 2 axial gehalten. Zwischen dem Stator 23 und dem Gehäusedeckel 1 ist ein Radialspalt ausgebildet, welcher den Stator über 360° umgibt.

Der Motordeckel 2 schließt den Aufnahmeschacht 11 des Gehäusedeckels 1 auf der der Förderkammer axial abgewandten Seite fluiddicht ab. Zu diesem Zweck ist weist der Gehäusedeckel 1 eine Gehäusedeckelumfangswand auf und der Motordeckel 2 eine Motordeckelumfangswand, wobei die Gehäusedeckelumfangswand und die Motordeckelumfangswand einander axial überlappen, und wobei zwischen dem Motordeckel 2 und dem Gehäusedeckel 1 wenigstens eine Dichtung 25 ausgebildet ist. Der Motordeckel 2 ragt in axialer Richtung wenigstens teilweise in den Aufnahmeschacht 11 des Gehäusedeckels 1 hinein, sodass die Gehäusedeckelumfangswand die Motordeckelumfangswand in axialer Richtung wenigstens teilweise außen umschließt.

Bei dem Antriebsmotor 20 handelt es sich vorzugsweise um einen nasslaufenden Elektromotor. Zu diesem Zweck ist der Aufnahmeschacht 11 des Gehäusedeckels 1 im Bereich des Antriebsmotors 20 fluidkommunizierend mit der Förderkammer verbunden. Bevorzugt ist der Aufnahmeschacht 11 des Gehäusedeckels 1 im Bereich des Antriebsmotors 20 fluidkommunizierend mit der Hochdruckseite der Förderkammer verbunden, insbesondere über das Gleitlager der Gehäusezwischenstruktur 12.

Damit das Fluid im Bereich des Antriebsmotors 20 aus dem Aufnahmeschacht 11 abfließen kann, ist der Aufnahmeschacht 11 im Bereich des Antriebsmotors 20 mit dem Sauganschluss 6 der Pumpen-Motor-Einheit über einen Verbindungskanal 16 fluidkommunizierend verbunden. Der Verbindungskanal 16 ist in Form eines Durchgangs durch die Gehäusezwischenstruktur 12 ausgebildet. Somit ist der Aufnahmeschacht 11 im Bereich des Antriebsmotors 20 ebenfalls fluidkommunizierend mit dem Förderkammereinlass verbunden. Auf diese Weise kann Fluid aus dem Aufnahmeschacht 11, welches sich im Bereich des Antriebsmotors 20 befindet, über den Verbindungskanal 16 abfließen. Der Antriebsmotor 20 wird somit kontinuierlich mit Fluid aus der Förderkammer umspült und gekühlt.

Des Weiteren umfasst die Pumpen-Motor-Einheit einen Elektronikdeckel 3, der auf der dem Antriebsmotor 20 axial abgewandten Seite des Motordeckels 2 stirnseitig angeordnet ist. Zwischen dem Motordeckel 2 und dem Elektronikdeckel 3 ist ein Elektronikraum ausgebildet, welcher in axialer Richtung und in Umfangsrichtung von dem Elektronikdeckel 3 und dem Motordeckel 2 begrenzt wird. Dabei begrenzt der Elektronikdeckel 3 den Elektronikraum umfangseitig und auf der dem Antriebsmotor 20 axial abgewandten Stirnseite. Der Motordeckel 2 begrenzt den Elektronikraum auf der dem Antriebsmotor 20 axial zugewandten Stirnseite.

Der Motordeckel 2 schließt den Elektronikraum auf der dem Antriebsmotor 20 axial zugewandten Seite stirnseitig fluiddicht ab. Zu diesem Zweck überlappt die Motordeckelumfangswand in axialer Richtung mit einer Elektronikdeckelumfangswand, wobei zwischen der Motordeckelumfangswand und der Elektronikdeckelumfangswand eine Dichtung 35 ausgebildet ist. Die Dichtung 35 ist als Radialdichtung ausgebildet. Der Motordeckel 2 ragt in eine Ausnehmung des Elektronikdeckels 3 axial hinein, sodass die Motordeckelumfangswand von der Elektronikdeckelumfangswand radial außen umschlossen wird.

Der Elektronikdeckel 3 weist auf der dem Antriebsmotor 20 axial abgewandten Stirnseite Kühlelemente, insbesondere Kühlrippen, zur Kühlung der Pumpen-Motor-Einheit auf. Die Kühlrippen sind vorzugsweise aus Metall gebildet. Der Elektronikdeckel 3 und die Kühlrippen können zusammen einstückig ausgebildet sein, beispielsweise in einem Verfahren der Urformung oder Umformung geformt sein oder aus stoffschlüssig gefügten Teilen, beispielsweise mittels Sintern, bestehen. Es ist jedoch auch möglich, die Kühlrippen mit dem Elektronikdeckel 3 in einem weiteren Herstellungsschritt zu fügen. So kann der Elektronikdeckel 3 beispielsweise aus einem anderen Material als die Kühlrippen gebildet sein. Vorzugsweise weisen der Elektronikdeckel 3 und die Kühlrippen das gleiche Material auf.

In dem Elektronikraum ist eine Steuerungselektronik 32 ausgebildet. Die Steuerungselektronik 32 dient der Steuerung des Antriebsmotors 20. Die Steuerungselektronik 32 wird von dem Elektronikdeckel 3 radial außen umgeben. Die dem Elektronikdeckel 3 axial gegenüberliegende Rückseite der Steuerungselektronik 32 ist mit dem Elektronikdeckel 3 wärmeleitend verbunden. Vorzugsweise ist die Steuerungselektronik 32 mit dem Elektronikdeckel 3 mittels einer Wärmeleitpaste wärmeleitend verbunden.

Der Gehäusedeckel 1 und/oder die Gehäusezwischenstruktur 12 sind vorzugsweise aus Metall hergestellt, können aber beispielsweise auch aus Kunststoff hergestellt sein. Insbesondere der Motordeckel 2 ist vorzugsweise aus Kunststoff hergestellt, kann aber beispielsweise auch aus Metall hergestellt sein.

Die Figur 3 zeigt eine isometrische Ansicht der Pumpen-Motor-Einheit. Das Gehäuse der Pumpen-Motor-Einheit wird mittels Halteelementen 7 zusammengehalten, wobei die Halteelemente 7 vorzugsweise durch Schrauben gebildet sind. Die Halteelemente 7 durchragen den Gehäusedeckel 1 und/oder den Elektronikdeckel 3, wobei der Motordeckel 2 zwischen dem Gehäusedeckel 1 und dem Elektronikdeckel 3 axial gehalten wird. Der Motordeckel 2 kann ebenfalls von den Halteelementen 7 durchragt werden. Alternativ kann der Motordeckel 2 auch ausschließlich zwischen dem Gehäusedeckel 1 und dem Elektronikdeckel 3 verspannt werden.

Des Weiteren ist in Figur 3 zu sehen, dass der Sauganschluss 6 und der Druckanschluss 5 jeweils von einer Dichtung umgeben sind, wobei die Dichtung des Sauganschlusses 6 sowohl den Druckanschluss 5 als auch den Sauganschluss 6 radial umgibt. Die Dichtung des Druckanschlusses 5 dient der Abdichtung des Druckanschlusses 5 von dem Sauganschluss 6, während die Dichtung des Sauganschlusses 6 zur Abdichtung nach außen dient. Die beiden Dichtungen können zusammen oder als einzelne Dichtungen ausgebildet sein.

### Bezugszeichen

- 1: Gehäusedeckel
- 2: Motordeckel
- 3: Elektronikdeckel
- 4: Antriebswelle
- 5: Druckanschluss
- 6: Sauganschluss
- 7: Halteelement
- 10: Fördereinrichtung
- 11: Aufnahmeschacht
- 12: Gehäusezwischenstruktur
- 13: zweites Förderglied
- 14: Förderglied
- 15: Dichtung
- 16: Verbindungskanal
- 17: Freisparungsnut
- 20: Antriebsmotor
- 23: Stator
- 24: Rotor
- 25: Dichtung
- 32: Steuerungselektronik
- 35: Dichtung
- 40: Montagestruktur
- 41: Durchgänge

## Patentansprüche

1. Pumpen-Motor-Einheit zur Förderung eines Fluids, beispielsweise zur Förderung von Getriebeöl und/oder Schmieröl bei Kraftfahrzeugen, die Folgendes umfasst:
1.1 ein Gehäuse, das einen einstückigen Gehäusedeckel (1), eine Gehäusezwischenstruktur (12) und einen Motordeckel (2) umfasst, wobei der Gehäusedeckel (1) und die Gehäusezwischenstruktur (12) eine Förderkammer axial an beiden Stirnseiten und radial umfangseitig begrenzen,
1.2 eine Fördereinrichtung (10) mit einem in der Förderkammer drehbaren Förderglied (13, 14) zur Förderung des Fluids
1.3 und einen Antriebsmotor (20), der über eine Antriebswelle (4) mit der Fördereinrichtung (10) verbunden ist, wobei
1.4 der Gehäusedeckel (1) einen Aufnahmeschacht (11) bildet,
1.5 der Antriebsmotor (20) und die Gehäusezwischenstruktur (12) in dem Aufnahmeschacht (11) angeordnet sind,
1.6 der Gehäusedeckel (1) einen Druckanschluss (5) und einen Sauganschluss (6) ausbildet, und der Druckanschluss (5) und der Sauganschluss (6) in der der Förderkammer axial abgewandten Stirnseite des Gehäusedeckels (1) ausgebildet sind, und wobei
1.7 der Druckanschluss (5) und der Sauganschluss (6) von einer Dichtung (15) umgeben, vorzugsweise radial umgeben, sind.

2. Pumpen-Motor-Einheit nach dem vorhergehenden Anspruch, **dadurch gekennzeichnet, dass** die Dichtung (15) des Sauganschlusses (6) den Druckanschluss (5) und den Sauganschluss (6) gegenüber der Umgebung abdichtet und die Dichtung (15) des Druckanschlusses (5) den Druckanschluss (5) von dem Sauganschluss (6) abdichtet, und wobei die Dichtung (15) des Druckanschlusses (5) und die Dichtung (15) des Sauganschluss (6) als eine gemeinsame Dichtung (15) oder als einzelne Dichtungen ausgebildet sind.

3. Pumpen-Motor-Einheit nach einem der vorhergehenden Ansprüche, wobei die Pumpen-Motor-Einheit eine außenliegende Pumpen-Motor-Einheit ist und eine Montagestruktur (40) umfasst, mittels welcher die Pumpen-Motor-Einheit mit einem Verbraucher verbunden werden kann, wobei die Montagestruktur (40) vorzugsweise radial außen von dem Gehäusedeckel (1) vorragt.

4. Pumpen-Motor-Einheit nach dem vorhergehenden Anspruch, wobei die Montagestruktur (40) Durchgänge (41) aufweist, durch welche Befestigungselemente, beispielsweise Schrauben, ragen können, um mit an dem Verbraucher vorgesehenen Bohrungen oder Ausnehmungen einen Halteeingriff zu bilden.

5. Pumpen-Motor-Einheit nach einem der vorhergehenden Ansprüche, **dadurch gekennzeichnet, dass** die Pumpen-Motor-Einheit einen Elektronikdeckel (3) umfasst, der auf der dem Antriebsmotor (20) axial abgewandten Seite des Motordeckels (2) stirnseitig angeordnet ist, und dass zwischen dem Motordeckel (2) und dem Elektronikdeckel (3) ein Elektronikraum ausgebildet ist, welcher in axialer Richtung von dem Elektronikdeckel (3) und/oder dem Motordeckel (2) begrenzt wird und in welchem eine Steuerungselektronik (32) ausgebildet ist.

6. Pumpen-Motor-Einheit nach dem vorhergehenden Anspruch, **dadurch gekennzeichnet, dass** der Elektronikdeckel (3) und/oder der Motordeckel (2) die Steuerungselektronik (32) radial außen umgibt, und dass zwischen dem Elektronikdeckel (3) und dem Motordeckel (2) wenigstens eine Dichtung (35), vorzugsweise Radialdichtung, ausgebildet ist, um den Elektronikraum fluiddicht abzudichten.

7. Pumpen-Motor-Einheit einem der vorhergehenden Ansprüche, **dadurch gekennzeichnet, dass** das Gehäuse (1) mittels wenigstens eines Halteelements, beispielsweise einer Schraube, einem Stift oder einem Pressstift, zusammengehalten wird.

8. Pumpen-Motor-Einheit dem vorhergehenden Anspruch, **dadurch gekennzeichnet, dass** das wenigstens eine Halteelement von dem Gehäusedeckel (1) und/oder dem Elektronikdeckel (3) nach Anspruch 5 vorragt und/oder den Gehäusedeckel (1) und/oder den Elektronikdeckel (3) nach Anspruch 5 durchragt.

9. Pumpen-Motor-Einheit einem der beiden vorhergehenden Ansprüche, **dadurch gekennzeichnet, dass** der Motordeckel (2) zwischen dem Gehäusedeckel (1) und dem Elektronikdeckel (3) nach Anspruch 5 axial gehalten wird, und wobei das Halteelement den Motordeckel (2) durchragt oder der Motordeckel (2) zwischen dem Gehäusedeckel (1) und dem Elektronikdeckel (3) axial verspannt ist.

10. Pumpen-Motor-Einheit nach einem der vorhergehenden Ansprüche, **dadurch gekennzeichnet, dass** die Gehäusezwischenstruktur (12) die Förderkammer axial stirnseitig und umfangseitig begrenzt und der Gehäusedeckel (1) die Förderkammer axial stirnseitig begrenzt.

11. Pumpen-Motor-Einheit nach einem der vorhergehenden Ansprüche, **dadurch gekennzeichnet, dass** der Antriebsmotor (20) in axialer Richtung zwischen dem Motordeckel (2) und der Gehäusezwischenstruktur (12) angeordnet ist.

12. Pumpen-Motor-Einheit nach einem der vorhergehenden Ansprüche, **dadurch gekennzeichnet, dass** ein Stator (23) des Antriebsmotors (20) durch die Gehäusezwischenstruktur (12) und den Motordeckel (2) axial gehalten wird und zwischen dem Stator (23) und dem Gehäusedeckel (1) ein Radialspalt ausgebildet ist.

13. Pumpen-Motor-Einheit nach einem der vorhergehenden Ansprüche, **dadurch gekennzeichnet, dass** der Motordeckel (2) den Aufnahmeschacht (11) des Gehäusedeckels (1) auf der der Förderkammer axial abgewandten Seite abschließt, vorzugsweise fluiddicht abschließt.

14. Pumpen-Motor-Einheit nach einem der vorhergehenden Ansprüche, **dadurch gekennzeichnet, dass** der Gehäusedeckel (1) eine Gehäusedeckelumfangswand und der Motordeckel (2) eine Motordeckelumfangswand aufweisen, wobei die Gehäusedeckelumfangswand und die Motordeckelumfangswand einander axial überlappen, und dass zwischen dem Motordeckel (2) und dem Gehäusedeckel (1) wenigstens eine Dichtung (25), vorzugsweise eine Radialdichtung, ausgebildet ist, um den Aufnahmeschacht (11) fluiddicht abzudichten.

15. Pumpen-Motor-Einheit nach einem der vorhergehenden Ansprüche, **dadurch gekennzeichnet, dass** der Aufnahmeschacht (11) im Bereich des Antriebsmotors (20) mit einem Sauganschluss (6) der Pumpen-Motor-Einheit über einen Verbindungskanal (16) fluidkommunizierend verbunden ist und der Verbindungskanal (16) in Form eines Durchgangs durch die Gehäusezwischenstruktur (12) ausgebildet ist.
